# EUROPÄISCHE PATENTSCHRIFT

(11) **EP 0 689 791 B1**
(45) Veröffentlichungstag und Bekanntmachung des Hinweises auf die Patenterteilung: **02.02.2000**
(21) Anmeldenummer: 95109529.8
(22) Anmeldetag: 20.06.1995
(51) Int. Cl.: A47L 15/42

(54) **Spülmaschine mit einer Abwasser-Wärmerückgewinnungsanlage**
Dishwasher comprising a heat recovery system from used water
Lave-vaiselle avec un dispositif de récupération de chaleur des eaux usées

(30) Priorität: 28.06.1994 DE 9410453 U
(43) Veröffentlichungstag der Anmeldung: 03.01.1996
(73) Patentinhaber: Premark FEG L.L.C., Wilmington, Delaware 19801 (US)
(72) Erfinder: Archer, John, Carnfield, Bedfordshire MK 43 0HA (GB); Wörter, Markus, D-77749 Hohberg (DE)
(74) Vertreter: Füchsle, Klaus, Dipl.-Ing.

(56) Entgegenhaltungen:
- WO-A-85/05576
- DE-A- 3 901 169
- DE-U- 9 114 663
- FR-A- 2 319 584
- FR-A- 2 540 720
- FR-A- 2 641 552
- GB-A- 2 271 503
- US-A- 4 156 621

## Beschreibung

Die Erfindung betrifft eine Spülmaschine mit einer Abwasser-Wärmerückgewinnungsanlage nach dem Oberbegriff des Anspruchs 1 oder 2, bei der die Wärmeenergie von bereits in einem vorhergehenden Betriebsablauf erwärmten Wasser für die Vorwärmung von kaltem Frischwasser genutzt wird. Die Erfindung betrifft insbesondere eine Spülmaschine, die für gewerbliche Zwecke anwendbar ist, d.h. Geschirr, Gläser oder dergleichen werden in einem Spülprogramm von etwa 50 bis 90 Sekunden gespült und durch eine klare, heiße Klarspülerlösung nachgespült, wobei beim normalen Programmablauf nur ein Teil der erwärmten Reinigerflotte durch aufzuwärmendes Frischwasser ersetzt wird.

Spülmaschinen mit einer Abwasser-Wärmerückgewinnungsanlage der genannten Art sind bekannt. Derartige gewerbliche Spülmaschinen werden zum Spülen von Geschirr und Gläsern verwendet, an denen die Speisereste noch nicht allzu lange, d.h. etwa maximal 30 bis 40 Minuten, angetrocknet sind, so daß durch eine Spülung von ungefähr 50 bis 90 sek. mit warmer Reinigerflotte und einer heißen Klarspülerlösung von 8 bis 11 sek. das Geschirr bzw. die Gläser gereinigt werden. Da derartige Spülmaschinen den ganzen Tag bzw. in dauerndem Betrieb sind, wird die Klarspülerlösung bzw. die Reinigerflotte aus Einsparungs- und Umweltschutzgründen intern wieder gereinigt und erneut für die Spülung verwendet. Nur ein bestimmter Anteil wird zur heißen Klarspülung im Nachspülprogramm als kaltes Frischwasser neu in den bestehenden Wasserkreislauf hinzugeführt. Um die Wärmeenergie der entsprechend der neu hinzugeführten Frischwassermenge abfließenden, warmen Reinigerflotte zu nutzen, ist bereits bei den bestehenden Geschirrspülmaschinen eine Abwasserwärme-Rückgewinnungsanlage mit einem Wärmetauscher bekannt. Jedoch ist hierbei die neu hinzugeführte Frischwassermenge nicht der ablaufenden warmen Abwassermenge angepaßt; ebensowenig ist der zeitliche Ablauf der im Wärmetauscher aneinandervorbeiströmenden Flüssigkeiten aneinander angepaßt. Denn bei den bekannten Abwasser-Wärmerückgewinnungsanlagen ist lediglich ein Überlauf im Reinigertank für die im Geschirrspüler aufgefangene, warme Reinigerflotte vorgesehen, über den eine mindestens der Frischwassermenge entsprechende Menge warme Reinigerflotte in einen Zwischenbehälter fließt, von dem es über ein entfernbares Sieb und dann durch einen Koaxialwärmetauscher strömt, der mit einer größeren Menge zugeführten, ruhenden Frischwassers beaufschlagt ist. Dadurch kann nur ein geringer Anteil der Wärmeenergie der abfließenden Reinigerflotte zum Aufwärmen des kalten Frischwassers genutzt werden . Zudem muß das Sieb im Zwischenbehälter herausnehmbar ausgestaltet sein, um es von den abgelagerten Speiseresten und Fetten zu reinigen.

Des weiteren weisen die bekannten Geschirrspülmaschinen der genannten Art den Nachteil auf, daß beim Ablauf des Endprogramms vor dem Abschalten der Maschine nur ein Ablaufen der gesamten warmen Reinigerflotte aus dem Reinigungstank direkt in ein Abwassersystem erfolgt und somit die gesamte Wärmeenergie ungenützt verloren geht.

Aus der WO-A-8505576 ist eine Abwasser-Wärmerückgewinnungsanlage für eine Spülmaschine mit einem Reinigertank zum Auffangen des warmen Spülwassers bekannt. Der Reinigertank ist über eine Zuleitung mit einem Zwischentank verbunden. Hierbei kann durch Betätigung eines in der Zuleitung vorgesehenen Magnetventils das warme Spülwasser aus dem Reinigertank in den Zwischentank abgelassen werden. Von dem Zwischentank wird das warme Spülwasser schließlich mittels einer Pumpe in einen Gegenstromwärmetauscher gepumpt, um dort kaltes Wasser vorzuwärmen.

Ferner ist in der FR-A-2 641 552 eine Geschirrspülmaschine mit einer Abwasser-Wärmerückgewinnungsanlage nach dem Oberbegriff des Anspruchs 1 oder 2 gezeigt, bei der von einem Reinigertank über eine Pumpe warmes Spülwasser in einen Wärmetauscher zugeführt wird, während über eine Frischwasserzuleitung kaltes Frischwasser durch den Wärmetauscher geführt wird. Bei dieser bekannten Anlage ist ein elektrisch steuerbares Ventil in der Frischwasserzuleitung sowie eine Pumpe am Ausgang des Wärmetauschers vorgesehen.

Das der Erfindung zugrundeliegende technische Problem besteht darin, die Wärmeenergie der Reinigerflotte in optimaler Weise zu nutzen.

Dieses technische Problem wird durch eine Spülmaschine mit den Merkmalen des Anspruchs 1 bzw. 2 gelöst.

Durch die erfindungsgemäße erste Spülmaschine wird erreicht, daß die Wärmeenergie der auslaufenden, warmen Reinigerflotte von Anfang an, bei Öffnen des Ablaufventils und des Mengenreglerventils, in optimaler Weise auf das neu hinzugeführte Frischwasser übertragen wird, wodurch das mit ungefähr 14°C in den Wärmetauscher einströmende Frischwasser an seinem Ausgang auf etwa 48°C erwärmt und die warme Reinigerflotte mit ungefähr 60°C am Ausgang des Wärmetauschers auf etwa 26°C abgekühlt wird. Durch die erfindungsgemäße Anordnung des Ablauf- und Mengenreglerventils und der Trennung von Zwischen- und Reinigertank, die nun erfindungsgemäß über eine Pumpe verbunden sind, kann eine vorbestimmte, der zuzuführenden Frischwassermenge angepaßte Reinigerflottenmenge in den Zwischenbehälter gepumpt werden und dann in zeit- und mengenmäßig optimaler Weise dem Wärmetauscher zugeführt werden. Hierdurch ist eine kleinere Dimensionierung des Wärmetauschers gegenüber dem bekannten Stand der Technik ermöglicht.

Bei der erfindungsgemäßen zweiten Spülmaschine mit einer Intervallpumpe zwischen dem Zwischentank und dem Wärmetauscher ist es zudem möglich, die durch den Wärmetauscher ablaufende Reinigerflotte nicht nur zur optimalen Nutzung der Wärmeenergie dieser Reinigerflotte zu nutzen, indem intervallmäßig die gleiche Menge warmer Reinigerflotte aus dem Zwischentank in den Wärmetauscher geleitet wird wie kaltes Frischwasser im Gegenstrom durch den Wärmetauscher fließt, sondern es kann nun auch die Reinigerflotte in einen Ablauf geleitet werden, der nicht in Bodennähe vorgesehen sein muß, sondern auch weit darüber, z.B. zum Anschließen an einen in einer größeren Höhe angebrachten Siphon. Durch den intervallmäßigen Betrieb der Intervallpumpe und dem gleichzeitigen Öffnen des zuvor beschriebenen Mengenreglerventils strömt im wesentlichen die gleiche Menge Frischwasser in den Wärmetauscher, wie Reinigerflotte durch die Pumpe in den Ablauf gepumpt wird. Der Intervallbetrieb wird gewählt, damit bei den vorteilhaften, größeren Querschnittsdurchmessern der Rohre eine kleine Durchlaufmenge von etwa 4 Litern pro Minute eingehalten werden kann. Eine Verengung des Durchmessers der Rohre würde zu einer Verstopfung der Rohre durch Ablagerung von mitgeführten Schmutzpartikeln, insbesondere Fett, führen. Ein dauernder Betrieb der Pumpe würde einen zu großen Durchfluß von erwärmtem Schmutzwasser im Wärmetauscher verursachen.

Bei den zuvor beschriebenen erfindungsgemäßen Spülmaschinen ist es auch erstmals möglich, bei gleicher Spülleistung und gleichen Ausmaßen der Spülmaschine zum einen den zum weiteren Erhitzen des angewärmten Frischwassers erforderlichen Erhitzer kleiner zu gestalten und zum anderen den Wärmetauscher in der Geschirrspülmaschine selbst anzuordnen. Das hat den großen Vorteil, daß die gesamte Spülmaschineneinheit im Werk zusammengebaut werden kann, was bei den bekannten Geschirrspülmaschinen der genannten Art bisher nicht möglich war, da der Wärmetauscher derart groß dimensioniert werden mußte, damit eine ausreichende Aufwärmung des kalten Frischwassers erfolgt, daß er nur neben der eigentlichen Spülmaschine am Bestimmungsort extra montiert und angeschlossen werden konnte.

Bei der erfindungsgemäßen Spülmaschine nach dem Anspruch 1 ist der Wärmetauscher unterhalb des Zwischen- bzw. Reinigertanks angeordnet, so daß bei geschlossenem Zustand des Ablaufventils die verschmutzte, warme Reinigerflotte in dem Wärmetauscher bis zu einer vorgegebenen Höhe im Zwischentank steht, wodurch von Eingang bis Ausgang des Frischwassers im Wärmetauscher eine Wärmeübertragung in optimaler Weise erfolgt. Zudem wird durch die Anordnung des Wärmetauschers unterhalb des Zwischentanks es beim Endprogramm erstmals ermöglicht, daß bei offenem Ablaufventil die gesamte Reinigerflottenmenge durch die erfindungsgemäße Pumpe zwischen Reinigertank und Zwischentank in den Zwischentank gepumpt werden kann und direkt über ein Schmutzsieb und die Bodenwandung des Zwischentanks läuft und die gesamten Fette, die sich auch im Wärmetauscher ablagern, in das Ablaufsystem mit hinaustragen.

Optimalerweise wird ein Wärmetauscher von der Art eines Koaxialwärmetauschers benutzt, bei dem ein spiralförmig gewundenes Außenrohr für das kalte Frischwasser und ein von diesem Außenrohr umgebenes Innenrohr für die warme Reinigerflotte vorgesehen ist, wodurch die Abmessungen des Wärmetauschers weiter verringert werden können.

Vorteilhafterweise ist der Wärmetauscher derart konstruiert, daß die Reinigerflotte und das Frischwasser jeweils mit ca. 3 bis 5 Liter/min im Gegenstrom zueinander strömen.

Aus den vorgenannten Gründen ist es besonders vorteilhaft, den Zwischentank derart zu gestalten, daß er einen tiefsten Punkt aufweist, in dem ein Schmutzsieb zum Auffangen der in der verschmutzten Reinigerflotte enthaltenen Schmutzpartikel angeordnet ist und direkt über dem Schmutzsieb des Zwischentanks die Zuleitung für die warme Reinigerflotte aus dem Reinigertank angeordnet ist, so daß ein Ausfluß über dem Schmutzsieb erfolgt und dadurch die warme Reinigerflotte die bei leerem Zwischentank am Schmutzsieb abgelagerten Schmutzpartikel aufschwemmt und in das Abwassersystem mitführt.

Besonders vorteilhaft ist es, wenn des weiteren die Zuleitung in den Zwischentank einen oder mehrere Ausflußöffnungen über dem Behälterboden des Zwischentanks aufweist, so daß die warme Reinigerflotte aus dem Reinigertank bei leerem Zwischentank über den gesamten Behälterboden direkt in das Schmutzsieb abläuft, wodurch der gesamte Behälterboden des Zwischentanks von den abgelagerten Schmutzresten gereinigt wird.

Im folgenden sind zur weiteren Erläuterung und zum besseren Verständnis der Erfindung zwei Ausführungsbeispiele unter Bezugnahme auf die beigefügten Zeichnungen näher beschrieben und erläutert. Es zeigt:
- Fig. 1: eine schematische Darstellung einer Geschirrspülmaschine mit einer erfindungsgemäßen ersten Abwasser-Wärmerückgewinnungsanlage,
- Fig. 2: einen Querschnitt durch einen Zwischentank der erfindungsgemäßen Abwasser-Wärmerückgewinnungsanlagen nach Fig. 1 und Fig. 3, und
- Fig. 3: eine schematische Darstellung einer Geschirrspülmaschine mit einer erfindungsgemäßen zweiten Abwasser-Wärmerückgewinnungsanlage.

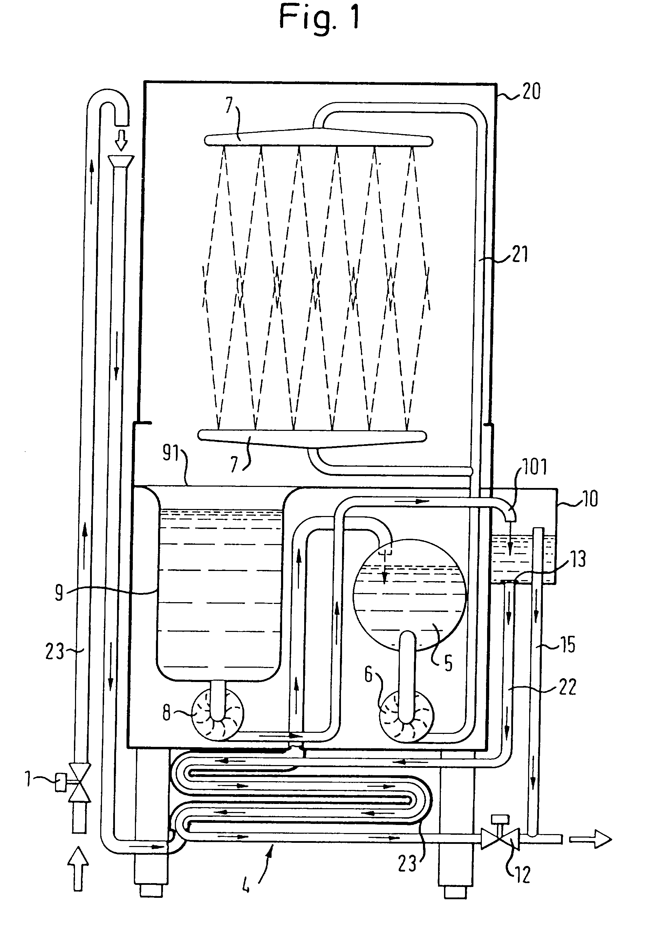

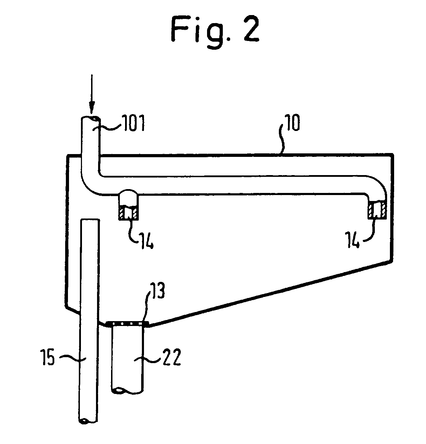

Wie aus der Fig. 1 ersichtlich, besteht die Spülmaschine aus einem Gehäuse 20, in dessen oberer Hälfte das Geschirr oder die Gläser zum Spülen eingeschoben werden. Hierzu sind obere und untere Klar-Spüleinrichtungen 7 angebracht, die durch eine Zuführleitung 21 mit einem Erhitzer 5 verbunden sind. Eine Nachspülpumpe 6 ist zwischen dem Erhitzer 5 und den Spüleinrichtungen 7 in der Zuführleitung 21 angeordnet. Der Spülbereich im Gehäuse 20 ist vom darunterliegenden Gehäuse durch Schmutzsiebe 91 getrennt, die eine Öffnung aufweist, die mit einem Reinigertank 9 für die warme, verschmutzte Reinigerflotte verbunden ist. Der Reinigertank 9 weist an seinem tiefsten Punkt eine Entnahmeöffnung auf, durch die mittels einer Ablaufpumpe 8 das Wasser über eine Zuführleitung 101 in einen Zwischentank 10 eingeleitet wird. Der Zwischentank 10 wird noch näher unter Bezugnahme auf die Fig. 2 beschrieben.

Vom Zwischentank 10 führt eine Ablaufleitung 22 nach unten in einen Wärmetauscher 4. Diese Ablaufleitung 22 ist im Wärmetauscher 4 von einer äußeren Frischwasserzuführleitung 23 umhüllt, deren, in Strömungsrichtung des Frischwassers gesehen, vorderes Ende ein Mengenreglerventil 1 aufweist, das mit einem Frischwasseranschluß verbunden ist. Die Frischwasserzuführleitung 23 führt gewunden durch den Wärmetauscher 4 und endet im Erhitzer 5. Das, in Strömungsrichtung der Reinigerflotte gesehen, Ende der aus dem Wärmetauscher austretenden Ablaufleitung 22 weist ein Ablaufventil 12 auf, durch das die Ablaufleitung entweder gesperrt oder durchgängig mit einem Abwasserkanal verbunden ist. Bei dieser schematischen Darstellung ist die Abführung der Reinigerflotte aus dem Reinigertank 9 zum Reinigerflotteumwälzkreislauf nicht gezeigt.

Aus der Fig. 1 ist ersichtlich, daß der Koaxialwärmetauscher 4 unterhalb der gesamten anderen Einrichtungen der Geschirrspülmaschine im Bodenbereich des Gehäuses 20 angeordnet ist.

Bei der in Fig. 2 gezeigten Schnittdarstellung des Zwischentanks 10 wird deutlich, daß eine der Ausflußöffnungen 14 über dem Schmutzsieb 13 des Zwischentanks 10 und eine weitere am Rand des Zwischentanks 10 angeordnet ist. Der Zwischentank 10 weist einen auf den tiefsten Punkt mit dem Schmutzsieb 13 zulaufenden Boden auf, d.h. er hat geneigte Bodenwände. Des weiteren ist ein Überlauf 15 im Zwischentank 9 angeordnet, um bei verstopftem Schmutzsieb 13 den weiteren Betrieb der Spülmaschine zu ermöglichen, indem die Reinigerflotte über den Überlauf 15 direkt in das Abwassersystem unter Umgehung des Wärmetauschers 4 läuft.

Im Betrieb der Geschirrspülmaschine ist der Reinigertank 9 mit warmer, verschmutzter Reinigerflotte mit einer Temperatur von etwa 58 bis 65°C gefüllt. Durch die Ablaufpumpe 8 wird ein Teil, ungefähr 3 bis 5 l, vom tiefsten Punkt des Reinigertanks 9 über die Zuführleitung 101 in den Zwischentank 10 über die Ausflußöffnungen 14 eingeleitet. Zuvor wurde das Ablaufventil 12 der Geschirrspülmaschine geschlossen, so daß bereits in dem gesamten Innenrohr 22 und der Steigleitung bis zum Schmutzsieb 13 erwärmte Reinigerflotte steht. Gleichzeitig mit Inbetriebnahme des Mengenregelventiles 1 wird nun das Ablaufventil 12 geöffnet, so daß warme Reinigerflotte durch das Innenrohr im Wärmetauscher 4 in den Ablaufkanal fließt und gleichzeitig im Gegenstrom das frische, ungefähr 10 bis 17° kalte Frischwasser im Außenrohr des Wärmetauschers fließt, so daß die Wärmeenergie der warmen Reinigerflotte auf das kalte Frischwasser übertragen wird und dieses den Wärmetauscher mit ungefähr 48°C verläßt und in den Erhitzer 5 zugeführt wird, wo es auf die erforderliche Temperatur zum Klarspülen von ungefähr 80 bis 85° weiter erhitzt wird.

Indem von dem Reinigertank 9 nur ein Anteil der warmen Reinigerflotte aus dem Reinigertank 9 durch die Pumpe 8 in den Zwischentank 10 gepumpt wird und später während und nach dem Klarspülen die Ventile 12 und 1 gleichzeitig geöffnet werden, so daß die gleiche Menge von warmer Reinigerflotte und kaltem Frischwasser durch den Wärmetauscher im Gegenstrom fließen, wird eine optimale Wärmeübertragung und Ausnutzung der ansonsten verlorengehenden Wärmeenergie der Reinigerflotte für die Aufheizung des kalten Frischwassers genutzt, wodurch auch der Erhitzer 5 kleiner dimensioniert werden kann. Denn dadurch muß das Frischwasser in der nur geringen zur Nachspülung erforderlichen Menge bis auf die erforderliche Klarspültemperatur von etwa 85°C erhitzt werden.

Zudem wird die Wärmeenergie der warmen Reinigerflotte und ein Teil der Klarspüllösung vom Erhitzer 5 am Abend in optimaler Weise noch zum Reinigen des Zwischentanks genutzt, da bei offenem Ablaufventil 12 und geschlossenem Mengenreglerventil 1 mittels der Pumpe 8 der gesamte Inhalt des Reinigertanks 9 und zusätlicher Klarspüllösung durch die speziell über dem Schmutzsieb 13 und der Bodenwandung des Zwischentanks 10 angeordneten Ausflußöffnungen 14 hindurch gepumpt wird, wodurch die warme Reinigerflotte und die heiße Klarspüllösung die sich über Tage anlagernden Fette etc. von der Bodenwandung und der gesamten Innenrohrwandung des Wärmetauschers 4 in den Ablaufkanal bzw. das Abwassersystem mit befördert. Dadurch, daß bei geschlossenem Mengenreglerventil 1 und offenem Ablaufventil 12 nur warmes Spülwasser durch den Wärmetauscher 4 strömt, werden die Reste in optimaler Weise gelöst, denn es erfolgt nun bei dieser Stellung der Ventile keine Abkühlung der Reinigerflotte wie beim bekannten Stand der Technik, was zum Lösen der Speisereste nachteilig ist.

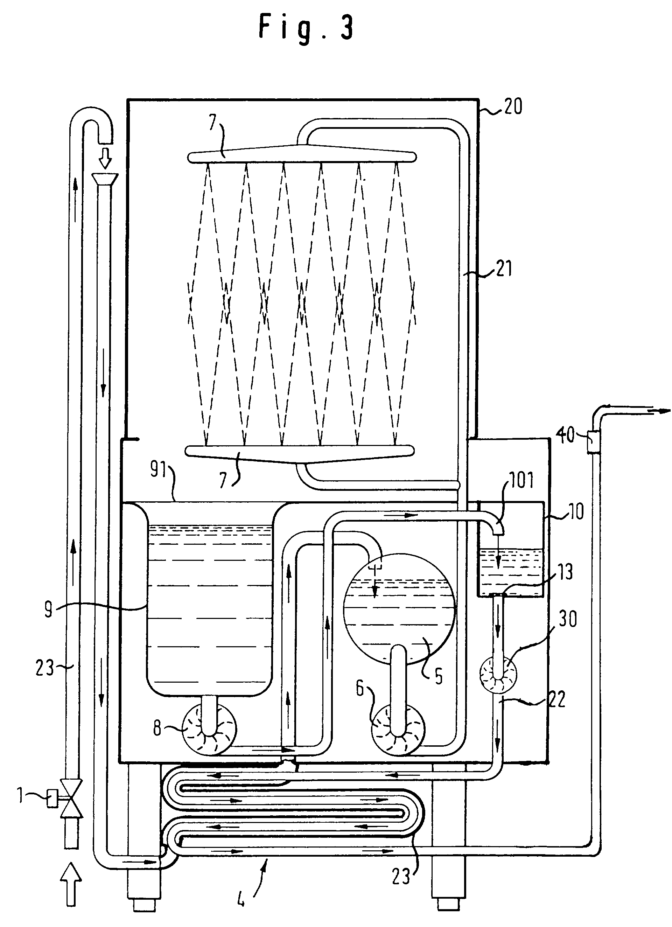

Bei der in der Fig. 3 gezeigten Geschirrspülmaschine mit einer Abwasser-Wärmerückgewinnungsanlage ist gegenüber der in der Fig. 1 dargestellten Geschirrspülmaschine kein Ablaufventil 12 vorhanden. Anstatt dessen ist in der Ablaufleitung 22 zwischen dem Zwischentank 10 und dem Wärmetauscher 4 eine Intervallpumpe 30 in der Ablaufleitung 22 angeordnet. Des weiteren ist gegenüber der in Fig. 1 dargestellten Geschirrspülmaschine der Ablauf nicht in Bodennähe, sondern in einer größeren Höhe über dem Boden vorgesehen und der Sicherheitsüberlauf 15 entfällt, da der Zwischenbehälter im Gehäuse 20 ist. Die weiteren Elemente der in Fig. 3 dargestellen Geschirrspülmaschine mit einer erfindungsgemäßen Abwasser-Wärmerückgewinnungsanlage entsprechen der in der Fig. 1 gezeigten Geschirrspülmaschine. Aufgrunddessen bedarf es hierzu keiner weiteren Erläuterung.

Zudem kann bei der in Fig. 3 dargestellten zweiten Ausführungsform der Abwasser-Wärmerückgewinnungsanlage vor dem Eintritt in den Siphon ein Rückschlagventil 40 vorteilhaft sein, das verhindert, daß durch Unterdruck im Siphon das in der bis zur Intervallpumpe 30 anstehende Wasser in der Zuleitung 22 abläuft.

Bei der zweiten Ausführungsform der erfindungsgemäßen Abwasser-Wärmerückgewinnungsanlage wird gleichzeitig mit Öffnung des Mengenreglerventils 1, das den Zustrom von Frischwasser steuert, die Intervallpumpe 30 intervallmäßig, d.h. je nach Bedarf taktweise betrieben, so daß im wesentlichen gleichzeitig die gleiche Menge Frischwassers durch den Wärmetauscher 4 läuft wie warme Reinigerflotte aus dem Zwischentank 10 abgepumpt wird. Dadurch wird wie bei der ersten Ausführungsform ein optimaler Wärmeaustausch im Wärmetauscher 4 ermöglicht und das kühle Frischwasser in optimaler Weise vorgewärmt.

## Patentansprüche

1. Spülmaschine mit einer Abwasser-Wärmerückgewinnungsanlage zum Vorwärmen von kaltem Frischwasser durch bereits erwärmtes Wasser und einem Reinigertank (9) zum Auffangen von warmer Reinigerflotte,
**gekennzeichnet durch**
- einen Zwischentank (10), der über eine in dem Zwischentank endende Zuleitung (101) mit dem Reinigertank (9) verbunden ist,
- eine in der Zuleitung (101) angeordnete Pumpe (8), die zumindest teilweise die warme Reinigerflotte vom Reinigertank (9) in den Zwischentank (10) fördert,
- einen unterhalb des Zwischentanks (10) angeordneten Wärmetauscher (4), der zum einen über eine mit einem Mengenreglerventil (1) ausgestattete Frischwasserzuleitung (23) mit einem Frischwasseranschluß für kaltes Wasser und zum anderen mit dem warme Reinigerflotte enthaltenden Zwischentank (10) verbunden ist,
- ein am Ausgang des Wärmetauschers (4) in der Reinigerflotten-Führung angeordnetes Ablaufventil (12),
- wobei das Mengenreglerventil (1) und das Ablaufventil (12) derart ausgebildet sind, daß entweder mit Inbetriebnahme des Mengenreglerventils (1) und gleichzeitigem Öffnen des Ablaufventils (12) im wesentlichen die gleiche Menge kalten Frischwassers durch den Wärmetauscher (4) läuft wie warme Reinigerflotte aus dem Zwischentank (10), oder bei geschlossenem Mengenreglerventil (1) und offenem Ablaufventil (12) mit Inbetriebnahme der in der Zuleitung (101) angeordneten Pumpe (8) die gesamte warme Reinigerflotte mit zusätzlicher Klarspülerlösung durch den Zwischentank (10) und den Wärmetauscher (4) fließt.

2. Spülmaschine mit einer Abwasser-Wärmerückgewinnungsanlage zum Vorwärmen kalten Frischwassers durch bereits erwärmtes Wasser und einem Reinigertank (9) zum Auffangen von warmer Reinigerflotte,
**gekennzeichnet durch**
- einen Zwischentank (10), der über eine in dem Zwischentank endende Zuleitung (101) mit dem Reinigertank (9) verbunden ist,
- eine in der Zuleitung (101) angeordnete Pumpe (8), die zumindest teilweise die warme Reinigerflotte vom Reinigertank (9) in den Zwischentank (10) fördert,
- einen Wärmetauscher (4), der zum einen über eine mit einem Mengenreglerventil (1) ausgestattete Frischwasserzuleitung (23) mit einem Frischwasseranschluß für kaltes Wasser und zum anderen mit dem warme Reinigungsflotte enthaltenden Zwischentank (10) verbunden ist, wobei die Reinigerflottenführung (22) in einem Ablauf in größerer Höhe über dem Boden endet, so dass die verschmutzte, warme Reinigerflotte in dem Wärmetauscher (4) und bis zu einer vorgegebenen Höhe im Zwischentank (10) steht,
- wobei in der Reinigerflottenführung (22) zwischen dem Zwischentank (10) und dem Wärmetauscher (4) eine Intervallpumpe (30) angeordnet ist, und wobei das Mengenreglerventil (1) und die Intervallpumpe (30) derart ausgebildet sind, daß entweder bei intervallmäßigem Betrieb der Intervallpumpe (30) und offenem Mengenreglerventil (1) im wesentlichen die gleiche Menge kalten Frischwassers durch den Wärmetauscher (4) läuft wie warme Reinigerflotte aus dem Zwischentank (10) abgepumpt wird, oder bei geschlossenem Mengenreglerventil (1) mit Inbetriebnahme der in der Zuleitung (101) angeordneten Pumpe (8) die gesamte warme Reinigerflotte mit zusätzlicher Klarspülerlösung durch den Zwischentank (10) und den Wärmetauscher (4) fließt.

3. Spülmaschine nach Anspruch 1 oder 2, dadurch gekennzeichnet, daß der Wärmetauscher von der Art eines Koaxialwärmetauschers (4) ist, in dem ein äußeres, spiralförmig gewundenes Rohr für das kalte Frischwasser und ein von diesem äußeren Rohr umgebenes Innenrohr für die warme Reinigerflotte vorhanden ist.

4. Spülmaschine nach einem der vorhergehenden Ansprüche, dadurch gekennzeichnet, daß sie so ausgebildet ist, daß die Reinigerflotte und das Frischwasser mit 3 bis 5 l/min durch den Wärmetauscher (4) läuft.

5. Spülmaschine nach Anspruch 1 oder 2, dadurch gekennzeichnet, daß der Zwischentank (10) einen tiefsten Punkt aufweist, in dem ein Schmutzsieb (13) zum Auffangen der im verschmutzten Spülwasser enthaltenen Schmutzpartikel angeordnet ist und die Zuleitung (101) eine über dem Schmutzsieb (13) angeordnete Ausflußöffnung aufweist, durch die warme, verschmutzte Reinigerflotte bei leerem Zwischentank (10) aus dem Reinigertank (9) direkt über dem Schmutzsieb (13) in den Zwischentank (10) einströmt.

6. Spülmaschine nach Anspruch 5, dadurch gekennzeichnet, daß die Zuleitung (101) eine oder mehrere Ausflußöffnungen (14) über dem Behälterboden des Zwischentanks (10) aufweist, so daß bei leerem Zwischentank (10) warme Reinigerflotte aus dem Reinigertank (9) über den gesamten Behälterboden in das Schmutzsieb (13) abläuft.

## Claims

1. Dishwasher with a waste water heat recovery system for preheating cold fresh water with already heated water and a cleaner tank (9) for collecting hot cleaning liquor, characterised by
- an intermediate tank (10) which is connected to the cleaner tank (9) by a supply pipe (101) ending in the intermediate tank,
- a pump (8) which is arranged in the supply pipe (101) and which at least partially pumps the hot cleaning liquor from the cleaner tank (9) into the intermediate tank (10),
- a heat exchanger (4) which is arranged below the intermediate tank (10) and which is connected firstly to a fresh water connection for cold water by a fresh water supply pipe (23) fitted with a volume control valve (1) and secondly to the intermediate tank (10) containing hot cleaning liquor,
- a drain valve (12) arranged at the output of the heat exchanger (4) in the cleaning liquor pipe,
- wherein the volume control valve (1) and the drain valve (12) are constructed in such a way that either with start-up of the volume control valve (1) and simultaneous opening of the drain valve (12) essentially the same quantity of cold fresh water flows through the heat exchanger (4) as hot cleaning liquor flows out of the intermediate tank (10), or with the volume control valve (1) closed and the drain valve (12) open with start-up of the pump (8) arranged in the supply pipe (101) all of the hot cleaning liquor with additional rinse solution flows through the intermediate tank (10) and the heat exchanger (4).

2. Dishwasher with a waste water heat recovery system for preheating cold fresh water with already heated water and a cleaner tank (9) for collecting hot cleaning liquor, characterised by
- an intermediate tank (10) which is connected to the cleaner tank (9) by a supply pipe (101) ending in the intermediate tank,
- a pump (8) which is arranged in the supply pipe (101) and which at least partially pumps the hot cleaning liquor from the cleaner tank (9) into the intermediate tank (10),
- a heat exchanger (4) which is connected firstly to a fresh water connection for cold water by a fresh water supply pipe (23) fitted with a volume control valve (1) and secondly to the intermediate tank (10) containing hot cleaning liquor, wherein the cleaning liquor pipe (22) ends in an outlet at a greater height above the bottom, so that the dirty hot cleaning liquor stands in the heat exchanger (4) and up to a predetermined level in the intermediate tank (10),
- wherein in the cleaning liquor pipe (22) between the intermediate tank (10) and the heat exchanger (4) is arranged an intermittent pump (30), and wherein the volume control valve (1) and the intermittent pump (30) are constructed in such a way that either during intermittent operation of the intermittent pump (30) and with the volume control valve (1) open essentially the same quantity of cold fresh water flows through the heat exchanger (4) as hot cleaning liquor is pumped out of the intermediate tank (10), or with the volume control valve (1) closed with start-up of the pump (8) arranged in the supply pipe (101) all of the hot cleaning liquor with additional rinse solution flows through the intermediate tank (10) and the heat exchanger (4).

3. Dishwasher according to claim 1 or 2, characterised in that the heat exchanger is of the type of a coaxial heat exchanger (4), in which an outer spirally wound pipe is provided for the cold fresh water and an inner pipe surrounded by this outer pipe is provided for the hot cleaning liquor.

4. Dishwasher according to any of the preceding claims, characterised in that it is constructed in such a way that the cleaning liquor and the fresh water flow at 3 to 5 litres/min through the heat exchanger (4).

5. Dishwasher according to claim 1 or 2, characterised in that the intermediate tank (10) exhibits a lowermost point at which a dirt screen (13) for collecting the dirt particles contained in the soiled cleaning liquor is arranged and the supply pipe (101) has an outlet opening which is arranged above the dirt screen (13) and through which hot dirty cleaning liquor when the intermediate tank (10) is empty flows out of the cleaner tank (9) directly over the dirt screen (13) into the intermediate tank (10).

6. Dishwasher according to claim 5, characterised in that the supply pipe (101) has one or more outlet openings (14) over the tank bottom of the intermediate tank (10), so that when the intermediate tank (10) is empty the hot cleaning liquor flows out of the cleaner tank (9) over the whole of the tank bottom into the dirt screen (13).

## Revendications

1. Lave-vaisselle avec un dispositif de récupération de chaleur des eaux usées, pour effectuer le préchauffage de l'eau neuve froide, au moyen d'eau déjà chauffée, et avec un réservoir de produit nettoyant (9) destiné à capter le bain de produit nettoyant chaud,
caractérisé par
- un réservoir intermédiaire (10) relié au réservoir de produit nettoyant (9) par une conduite d'amenée (101) s'achevant dans le réservoir intermédiaire,
- une pompe (8) disposée dans la conduite d'amenée (101), véhiculant au moins partiellement le bain de produit nettoyant du réservoir à produit nettoyant (9) dans le réservoir intermédiaire (10),
- un échangeur de chaleur (4) disposé au-dessous du réservoir intermédiaire (10), relié, d'une part, par une conduite d'amenée d'eau neuve (23) équipée d'une valve régulatrice de débit (1), à un raccordement d'eau neuve pour de l'eau froide et, d'autre part, au réservoir intermédiaire (10) contenant le bain chaud de produit nettoyant,
- une soupape de déversement (12), disposée à la sortie de l'échangeur de chaleur (4), dans le circuit de bain de produit nettoyant,
- où la valve régulatrice de débit (1) et la soupape d'évacuation (12) sont réalisées de manière que, soit avec la mise en service de la valve régulatrice de débit (1) et l'ouverture simultanée de la soupape d'évacuation (12), sensiblement la même quantité d'eau neuve froide que de bain chaud de produit nettoyant issu du réservoir intermédiaire (10) passe dans l'échangeur de chaleur (4), soit, lorsque la valve régulatrice de débit (1) est fermée et que la soupape d'évacuation (12) est ouverte, avec la mise en service de la pompe (8) disposée dans la conduite d'amenée (101), la totalité du bain chaud de produit nettoyant comprenant la solution d'agent mouillant supplémentaire passe par le réservoir intermédiaire (10) et l'échangeur de chaleur (4).

2. Lave-vaisselle avec un dispositif de récupération de chaleur des eaux usées, pour le préchauffage de l'eau neuve froide par de l'eau déjà chauffée, et avec un réservoir de produit nettoyant (9) destiné à capter un bain chaud de produit nettoyant,
caractérisé par
- un réservoir intermédiaire (10) relié au réservoir de produit nettoyant (9) par une conduite d'amenée (101) s'achevant dans le réservoir intermédiaire,
- une pompe (8) disposée dans la conduite d'amenée (101), véhiculant au moins partiellement le bain chaud de produit nettoyant, du réservoir à produit nettoyant (9) dans le réservoir intermédiaire (10),
- un échangeur de chaleur (4) relié, d'une part, par une conduite d'amenée d'eau neuve (23) équipée d'une valve de régulation de débit (1), à un raccordement d'eau neuve pour de l'eau froide et, d'autre part, au réservoir intermédiaire (10) contenant le bain chaud de produit nettoyant, où le circuit de produit nettoyant (22) s'achève dans une évacuation située à un niveau plus élevé au-dessus du sol, de manière que le bain chaud, souillé, de produit nettoyant se trouve dans l'échangeur de chaleur (4) et jusqu'à un niveau prédéterminé dans le récipient intermédiaire (10),
- où, dans le circuit de bain de produit nettoyant (22), entre le réservoir intermédiaire (10) et l'échangeur de chaleur (4), est disposée une pompe à fonctionnement par intervalles (30), et où la valve régulatrice de débit (1) et la pompe à interval (30) sont réalisées de manière que, soit en cas de fonctionnement par intervalle de la pompe à fonctionnement par intervalles (30) et lorsque la valve régulatrice de débit (1) est ouvert, sensiblement la même quantité d'eau neuve froide que de bain chaud de produit nettoyant issu du réservoir intermédiaire (10) est pompée à travers l'échangeur de chaleur (4), soit, lorsque la valve régulatrice de débit (1) est fermée, avec la mise en service de la pompe (8) disposée dans la conduite d'amenée (101), la totalité du bain chaud de produit nettoyant avec la solution d'agent mouillant supplémentaire passe dans le réservoir intermédiaire (10) et l'échangeur de chaleur (4).

3. Lave-vaisselle selon la revendication 1 ou 2, caractérisé en ce que l'échangeur de chaleur est du type d'un échangeur de chaleur coaxial (4) dans lequel est prévu un tube extérieur enroulé en spirale, destiné à l'eau neuve froide et un tube intérieur, entouré par ce tube extérieur, pour le bain chaud de produit nettoyant.

4. Lave-vaisselle selon l'une des revendications précédentes, caractérisé en ce qu'il est réalisé de manière que le bain de produit nettoyant et l'eau neuve passent à un débit allant de 3 à 5 litres/minute dans l'échangeur de chaleur (4).

5. Lave-vaisselle selon la revendication 1 ou 2, caractérisé en ce que le réservoir intermédiaire (10) présente un point bas extrême auquel un tamis à souillures (13) est disposé pour capter les particules de souillure contenues dans l'eau souillée, et la conduite d'amenée (101) présente une ouverture de sortie d'écoulement disposée au-dessus du tamis à souillures (13), à travers laquelle le bain chaud souillé de produit nettoyant s'introduit dans le réservoir intermédiaire (10), lorsque le réservoir intermédiaire (10) est vide, en venant du réservoir de produit nettoyant (9), qui se situe directement au-dessus le tamis à souillures (13).

6. Lave-vaisselle selon la revendication 5, caractérisé en ce que la conduite d'amenée (101) présente un ou plusieurs ouvertures de sortie d'écoulement (14) situées à un niveau supérieur à celui du fond de récipient du réservoir intermédiaire (10), de manière que, lorsque le réservoir intermédiaire (10) est vide, du bain chaud de produit nettoyant issu du réservoir de produit nettoyant (9) s'écoule, sur la totalité du fond de récipient, en allant dans le tamis à souillures (13).
